(19) Europäisches Patentamt
European Patent Office
Office européen des brevets

(11) **EP 4 622 094 A1**

(12) **EUROPEAN PATENT APPLICATION**
published in accordance with Art. 153(4) EPC

(43) Date of publication:
**24.09.2025 Bulletin 2025/39**

(21) Application number: **23911356.6**

(22) Date of filing: **26.10.2023**

(51) International Patent Classification (IPC):
***H02P 25/024*** (2016.01)

(52) Cooperative Patent Classification (CPC):
**H02P 25/024**

(86) International application number:
**PCT/JP2023/038762**

(87) International publication number:
**WO 2024/142572 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022212341**

(71) Applicants:
• **Mitsubishi Heavy Industries, Ltd.
Tokyo 100-8332 (JP)**
• **Magnomatics Limited
Sheffield S2 5BQ (GB)**

(72) Inventors:
• **WAKASA, Tsuyoshi
Tokyo 100-8332 (JP)**
• **ARINAGA, Shinji
Takasago City, Hyogo 6768686 (JP)**
• **YUGE, Atsushi
Tokyo 100-8332 (JP)**
• **CALVERLEY, Stuart
Sheffield, South Yorkshire S25BQ (GB)**
• **WEIGHT, Richard
Sheffield, South Yorkshire S25BQ (GB)**

(74) Representative: **Studio Torta S.p.A.
Via Viotti, 9
10121 Torino (IT)**

(54) **DRIVE DEVICE AND DRIVE DEVICE CONTROL METHOD**

(57) A drive device includes a synchronous machine that has a high-speed rotor and a low-speed rotor, and a control device configured to control an operation of the synchronous machine, in which the control device includes a torque estimation unit that estimates a torque output by the synchronous machine based on a current value of power for driving the synchronous machine, a displacement angle estimation unit that estimates a magnetic displacement angle between the high-speed rotor and the low-speed rotor based on an estimation value of the torque, a displacement angle measurement unit that measures the displacement angle between the high-speed rotor and the low-speed rotor, a determination unit that determines whether or not a difference between an estimation value and a measurement value of the displacement angle exceeds a predetermined threshold value, and an adjustment unit that outputs a torque command for increasing or decreasing the torque of the synchronous machine in a case where it is determined that the difference exceeds the threshold value.

FIG. 2

EP 4 622 094 A1

**Description**

TECHNICAL FIELD

The present disclosure relates to a drive device and a method for controlling a drive device.
Priority is claimed on Japanese Patent Application No. 2022-212341 filed on December 28, 2022, the content of which is incorporated herein by reference.

BACKGROUND ART

A magnetic-geared motor includes a high-speed rotor, a low-speed rotor, and a stator that are disposed on a concentric axis. The high-speed rotor rotates by supplying an alternating current to a coil of the stator, and the low-speed rotor rotates at a predetermined speed reduction ratio due to the rotation of the high-speed rotor.
In the magnetic-geared motor, when a magnetic displacement angle between the high-speed rotor and the low-speed rotor exceeds 90 degrees statically, step-out occurs. Therefore, when an output of the magnetic-geared motor or a load (or a prime mover) connected to the magnetic-geared motor is adjusted such that the displacement angle does not exceed 90 degrees, step-out is unlikely to occur.
As a method for suppressing step-out, for example, Patent Document 1 describes that in a magnet coupling that transmits a rotational output of a prime mover (turbine) to a generator, in a case where a displacement angle between a drive side rotary shaft on a prime mover side and a passive side rotary shaft on a generator side exceeds an allowable range, the rotational output of the prime mover is reduced. In addition, it is described that the allowable range of the displacement angle is changed according to a temperature around the magnet coupling in consideration of the fact that a magnetic force of a magnet used in the magnet coupling decreases as the temperature rises.

Citation List

Patent Documents

Patent Document 1: Japanese Unexamined Patent Application, First Publication No. 2014-125991

SUMMARY OF INVENTION

Technical Problem

However, since a speed at which the temperature changes is significantly slower than a speed at which the displacement angle changes, in the method described in Patent Document 1, there is a possibility in which an effect of improving step-out avoidance becomes small for an event in which the displacement angle changes suddenly, such as a sudden load change.
An object of the present disclosure is to provide a drive device and a method for controlling a drive device capable of suppressing the occurrence of the step-out even in a case where the displacement angle changes rapidly.

Solution to Problem

According to one aspect of the present disclosure, there is provided a drive device including a synchronous machine that has a high-speed rotor and a low-speed rotor, and a control device configured to control an operation of the synchronous machine, in which the control device includes a torque estimation unit that estimates a torque output by the synchronous machine based on a current value of power for driving the synchronous machine, a displacement angle estimation unit that estimates a magnetic displacement angle between the high-speed rotor and the low-speed rotor based on an estimation value of the torque, a displacement angle measurement unit that measures the displacement angle between the high-speed rotor and the low-speed rotor, a determination unit that determines whether or not a difference between an estimation value and a measurement value of the displacement angle exceeds a predetermined threshold value, and an adjustment unit that outputs a torque command for increasing or decreasing the torque of the synchronous machine in a case where it is determined that the difference exceeds the threshold value.
According to one aspect of the present disclosure, there is provided a method for controlling a drive device including a synchronous machine that has a high-speed rotor and a low-speed rotor, and a control device configured to control an operation of the synchronous machine, the method including: a step of estimating a torque output by the synchronous machine based on a current value of power for driving the synchronous machine; a step of estimating a magnetic displacement angle between the high-speed rotor and the low-speed rotor based on an estimation value of the torque; a step of measuring the displacement angle between the high-speed rotor and the low-speed rotor; a step of determining whether or not a difference between an estimation value and a measurement value of the displacement angle exceeds a predetermined threshold value; and a step of outputting a torque command for increasing or decreasing the torque of the synchronous machine in a case where it is determined that the difference exceeds the threshold value.

Advantageous Effects of Invention

According to the above-described aspect, it is possible to suppress the step-out even in a case where the displacement angle changes rapidly.

BRIEF DESCRIPTION OF DRAWINGS

[FIG. 1] A schematic diagram showing an overall configuration of a drive device according to a first embodiment.
[FIG. 2] A block diagram showing a functional configuration of a control device according to the first embodiment.
[FIG. 3] A flowchart showing an example of processing of the control device according to the first embodiment.
[FIG. 4] A diagram for describing functions of the drive device according to the first embodiment.
[FIG. 5] A diagram for describing functions of a control device according to a second embodiment.
[FIG. 6] A diagram for describing functions of a control device according to a third embodiment.
[FIG. 7] A diagram for describing functions of a control device according to a fourth embodiment.
[FIG. 8] A block diagram showing a functional configuration of a control device according to a fifth embodiment.
[FIG. 9] A first block diagram showing a functional configuration of a control device according to a sixth embodiment.
[FIG. 10] A second block diagram showing a functional configuration of the control device according to the sixth embodiment.
[FIG. 11] A diagram showing an example of a variable gain according to the sixth embodiment.
[FIG. 12] A block diagram showing a functional configuration of a control device according to a seventh embodiment.
[FIG. 13] A block diagram showing a functional configuration of a power converter according to an eighth embodiment.

DESCRIPTION OF EMBODIMENTS

<First Embodiment>

(Overall Configuration of Drive Device)

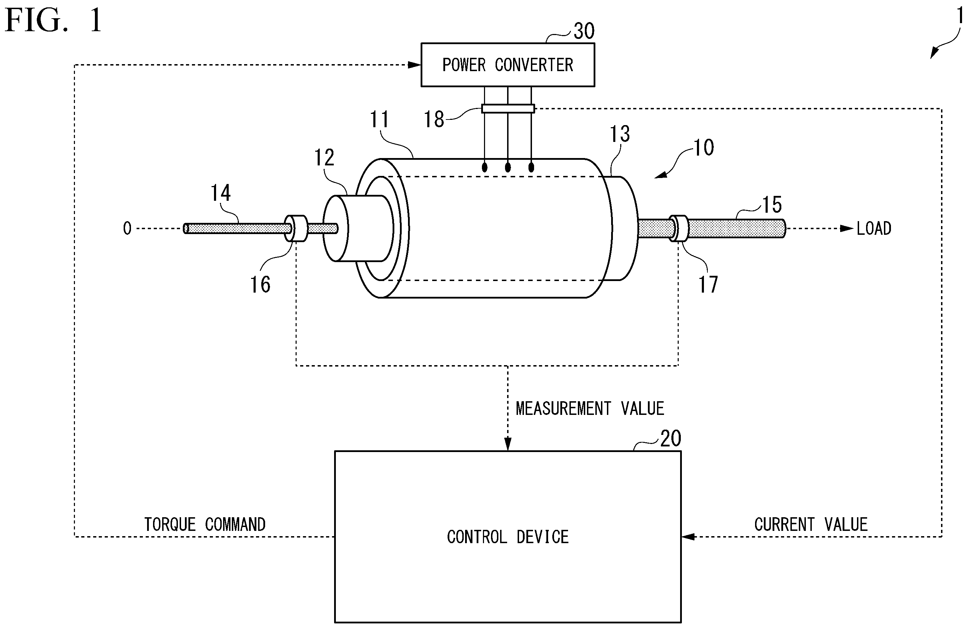

Hereinafter, a drive device 1 according to a first embodiment of the present disclosure will be described with reference to FIGS. 1 to 4.
FIG. 1 is a schematic diagram showing an overall configuration of the drive device according to the first embodiment.
As shown in FIG. 1, the drive device 1 includes a synchronous machine 10, a control device 20, and a power converter 30.
The synchronous machine 10 is a magnetic-geared motor. The synchronous machine 10 functions as an electric motor or a generator. In the present embodiment, an example in which the synchronous machine 10 is used as an electric motor will be described.
The synchronous machine 10 includes a stator 11, a high-speed rotor 12, and a low-speed rotor 13. The stator 11 has a cylindrical shape about an axis O and covers the high-speed rotor 12 and the low-speed rotor 13 from an outer peripheral side. The high-speed rotor 12 is rotatable about the axis O. The low-speed rotor 13 is disposed between the stator 11 and the high-speed rotor 12 and is rotatable about the axis O. When a current is supplied to a coil of the stator 11 from the power converter 30, the high-speed rotor 12 rotates. In addition, when the high-speed rotor 12 rotates, the low-speed rotor 13 rotates at a predetermined speed reduction ratio. The low-speed rotor 13 is connected to a load by a rotary shaft 15, and as the rotary shaft 15 rotates together with the low-speed rotor 13, the load is driven.
The control device 20 controls an operation of the synchronous machine 10. In particular, the control device 20 according to the present embodiment outputs a torque command for adjusting torque output by the synchronous machine 10 in order to suppress step-out between the high-speed rotor 12 and the low-speed rotor 13 of the synchronous machine 10.
The power converter 30 supplies a current to the coil of the stator 11 of the synchronous machine 10 such that the synchronous machine 10 can output torque according to a torque command of the control device 20.

(Functional Configuration of Control Device)

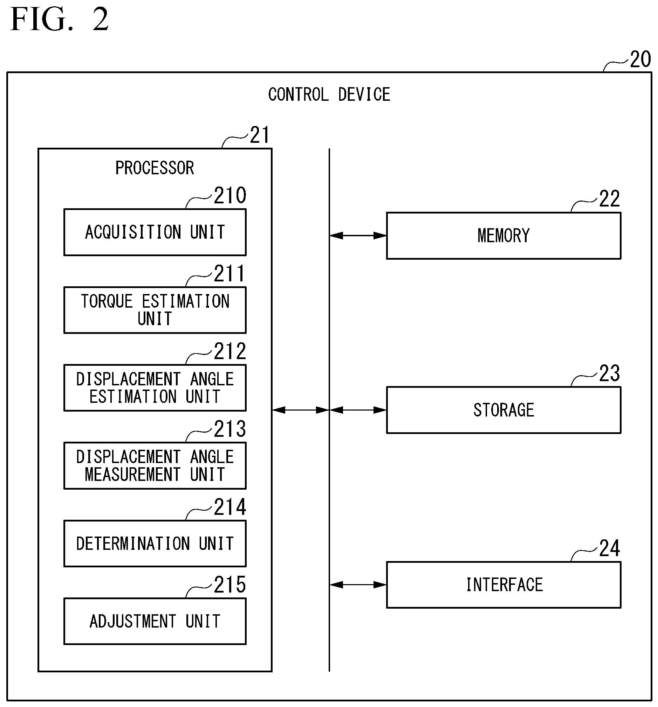

FIG. 2 is a schematic diagram showing an overall configuration of the drive device according to the first embodiment.

As shown in FIG. 2, the control device 20 includes a processor 21, a memory 22, a storage 23, and an interface 24.

The processor 21 operates in accordance with a predetermined program to exhibit functions as an acquisition unit 210, a torque estimation unit 211, a displacement angle estimation unit 212, a displacement angle measurement unit 213, a determination unit 214, and an adjustment unit 215.

The acquisition unit 210 acquires a measurement value from a sensor of the synchronous machine 10. In the present embodiment, the acquisition unit 210 acquires measurement values for detecting a displacement angle between the high-speed rotor 12 and the low-speed rotor 13 from a first sensor 16 provided at a rotary shaft 14 of the high-speed rotor 12 and a second sensor 17 provided at the rotary shaft 15 of the low-speed rotor 13. In addition, the acquisition unit 210 acquires a current value of power for driving the synchronous machine 10 from an ammeter 18 provided on a power line between the power converter 30 and the coil of the stator 11.

The torque estimation unit 211 estimates torque output by the synchronous machine 10 based on a current value of power for driving the synchronous machine 10.

The displacement angle estimation unit 212 estimates a displacement angle between the high-speed rotor 12 and the low-speed rotor 13 based on a torque estimation value.

The displacement angle measurement unit 213 estimates a displacement angle between the high-speed rotor 12 and the low-speed rotor 13 based on a measurement value of the first sensor 16 and a measurement value of the second sensor 17.

The determination unit 214 determines whether or not a difference between a displacement angle estimation value and a displacement angle measurement value exceeds a predetermined threshold value.

The adjustment unit 215 outputs a torque command for increasing or decreasing torque of the synchronous machine 10 in a case where it is determined that a difference between the displacement angle estimation value and the displacement angle measurement value exceeds a threshold value.

The memory 22 has a memory region necessary for an operation of the processor 21.

The storage 23 is a so-called auxiliary storage device and is, for example, a hard disk drive (HDD), a solid state drive (SSD), or the like.

The interface 24 is an interface for transmitting and receiving various types of information to and from an external device (the power converter 30 or the like).

A predetermined program executed by the processor 21 of the control device 20 is stored in a computer-readable recording medium. In addition, examples of the computer-readable recording medium include a magnetic disk, a magneto-optical disk, a CD-ROM, a DVD-ROM, and a semiconductor memory. In addition, the computer program may be distributed to a computer via a communication line, and the computer receiving the distribution may execute the program. Further, the program may be a program for realizing some of the functions described above. Further, the program may be a so-called difference file (difference program) that can realize the functions described above in combination with a program already recorded in a computer system.

(Processing Flow of Control Device)

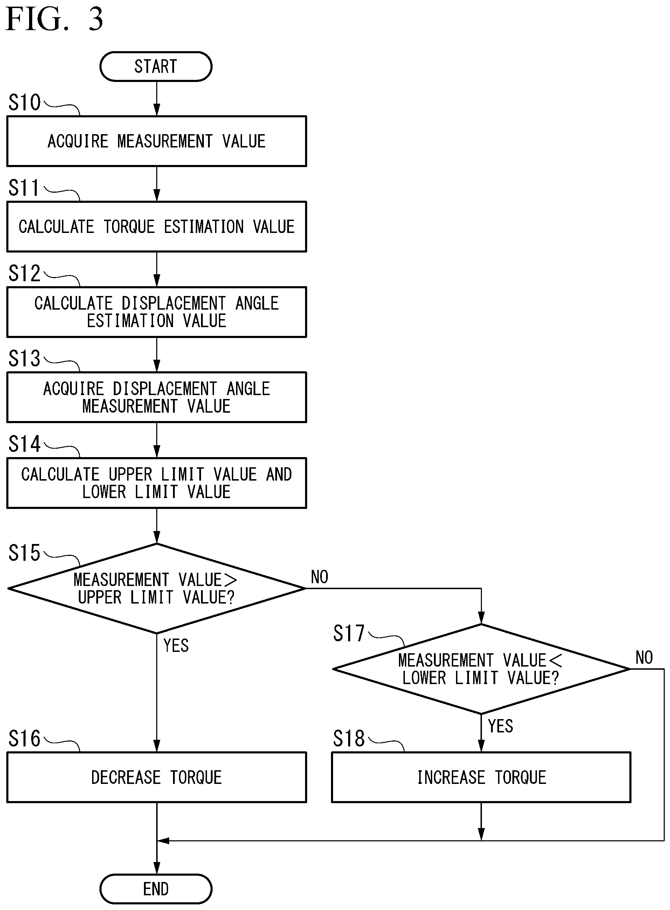

FIG. 3 is a block diagram showing a functional configuration of the control device according to the first embodiment.

Hereinafter, a processing flow of the control device 20 will be described in detail with reference to FIG. 3.

First, the acquisition unit 210 acquires a measurement value from each sensor of the synchronous machine 10 (step S10). Specifically, the acquisition unit 210 acquires the current current value of the synchronous machine 10 from the ammeter 18 and acquires measurement values of the first sensor 16 and the second sensor 17.

In addition, the torque estimation unit 211 calculates a torque estimation value $^\wedge\tau_m$ that is output by the synchronous machine 10 based on the current current value (step S11).

The displacement angle estimation unit 212 calculates a displacement angle estimation value $^\wedge\theta_e$ between the high-speed rotor 12 and the low-speed rotor 13 of the synchronous machine 10 based on the torque estimation value $^\wedge\tau_m$ under an assumption that load torque and torque output by the synchronous machine 10 are in balance (in a steady state) (step S12). For example, the displacement angle estimation unit 212 calculates the displacement angle estimation value $^\wedge\theta_e$ by using Equation (1) below with maximum transmission torque of the synchronous machine 10 defined as $\tau_{max}$. The displacement angle estimation value $^\wedge\theta_e$ serves as an index of a steady (or quasi-steady) load state.

$$\widehat{\theta_e} = sin^{-1}(\widehat{\tau_m}/\tau_{max}) \qquad \cdots (1)$$

Next, the displacement angle measurement unit 213 acquires a displacement angle measurement value $\theta_e$ between the high-speed rotor 12 and the low-speed rotor 13 of the synchronous machine 10 based on the measurement values of the first sensor 16 and the second sensor 17 (step S13).

When a load changes suddenly, the balance of the torque is broken, and a deviation occurs between the displacement angle estimation value $^{\wedge}\theta_e$ representing a steady displacement angle and the displacement angle measurement value $\theta_e$ which is an actual displacement angle. In the present embodiment, in a case where a degree of the deviation exceeds a threshold value $\delta$, the torque of the synchronous machine 10 is decreased (or increased) in a direction in which a change in the displacement angle is suppressed.

Specifically, first, the determination unit 214 calculates a displacement angle upper limit value and a displacement angle lower limit value based on the displacement angle estimation value $^{\wedge}\theta_e$ (step S14). Specifically, the determination unit 214 calculates a displacement angle upper limit value $\theta_{e,max}$ and a displacement angle lower limit value $\theta_{e,min}$ based on the displacement angle estimation value $^{\wedge}\theta_e$ and the threshold value $\delta$ as in Equations (2) and (3) below.

$$\theta_{e,max} = \widehat{\theta_e} + \delta \qquad \cdots (2)$$

$$\theta_{e,min} = \widehat{\theta_e} - \delta \qquad \cdots (3)$$

The threshold value $\delta$ is a value set in advance and is, for example, 10 degrees. The value of the threshold value $\delta$ may be changed into any value according to characteristics of the drive device 1, operating conditions, or the like.

Next, the determination unit 214 determines whether or not the displacement angle measurement value $\theta_e$ exceeds the displacement angle upper limit value $\theta_{e,max}$ (step S15).

In a case where the displacement angle measurement value $\theta_e$ exceeds the displacement angle upper limit value $\theta_{e,max}$ ($\theta_e > \theta_{e,max}$), the adjustment unit 215 outputs a torque command for decreasing the torque of the synchronous machine 10 (step S16).

On the other hand, in a case where the displacement angle measurement value $\theta_e$ does not exceed the displacement angle upper limit value $\theta_{e,max}$ ($\theta_e \leq \theta_{e,max}$), the determination unit 214 determines whether or not the displacement angle measurement value $\theta_e$ has fallen below the displacement angle lower limit value $\theta_{e,min}$ (step S17).

In a case where the displacement angle measurement value $\theta_e$ falls below the displacement angle lower limit value $\theta_{e,min}$ ($\theta_e < \theta_{e,min}$), the adjustment unit 215 outputs a torque command for increasing the torque of the synchronous machine 10 (step S18).

On the other hand, in a case where the displacement angle measurement value $\theta_e$ does not fall below the displacement angle lower limit value $\theta_{e,min}$, that is, in a case where the displacement angle measurement value $\theta_e$ is within a normal range of being equal to or larger than the displacement angle lower limit value $\theta_{e,min}$ and being equal to or smaller than the displacement angle upper limit value $\theta_{e,max}$, the adjustment unit 215 ends the processing without changing the torque of the synchronous machine 10.

The power converter 30 adjusts, based on a torque command input from the control device 20, a current supplied to the synchronous machine 10 such that torque output by the synchronous machine 10 is appropriately increased or decreased.

The control device 20 suppresses step-out of the synchronous machine 10 by executing a series of processes in FIG. 3 every time each measurement value is measured (acquired) while the synchronous machine 10 is being driven.

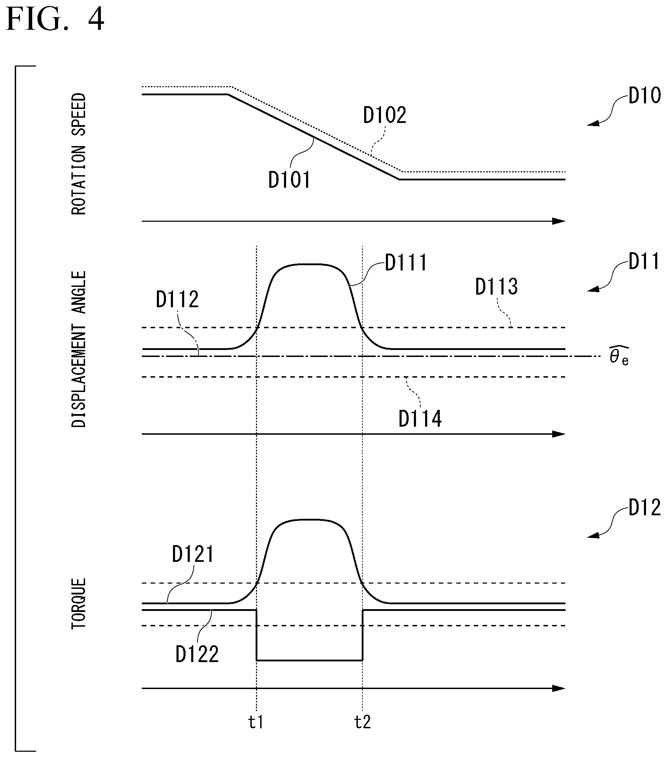

FIG. 4 is a diagram for describing functions of the drive device according to the first embodiment.

The processing and the operation of the drive device 1 will be described using a case where a load increases as an example with reference to FIG. 4.

A graph D10 of FIG. 4 is a time series of measurement values of rotation speeds of the high-speed rotor 12 and the low-speed rotor 13 of the synchronous machine 10. In the graph D10, D101 is a correction of the rotation speed of the high-speed rotor 12 with a speed reduction ratio to the low-speed rotor 13, and D102 represents the rotation speed of the low-speed rotor 13.

In a graph D11 of FIG. 4, D111 represents a time series of the displacement angle measurement value $\theta_e$, D112 represents a time series of the displacement angle estimation value $^{\wedge}\theta_e$, D113 represents a time series of the displacement angle upper limit value $\theta_{e,max}$, and D114 represents a time series of the displacement angle lower limit value $\theta_{e,min}$. Although FIG. 4 is described in a simplified manner, in reality, the displacement angle estimation value $^{\wedge}\theta_e$ is a value that changes from moment to moment according to a current value. Similarly, the displacement angle upper limit value $\theta_{e,max}$ and the displacement angle lower limit value $\theta_{e,min}$ are also values that change from moment to moment according to the displacement angle estimation value $^\wedge\theta_e$.

In a graph D12 of FIG. 4, D121 is a time series of a torque measurement value $\tau_m$ of the synchronous machine 10, which is measured experimentally, and D122 is a time series of a torque command T output by the control device 20.

In the example of the graph D11 of FIG. 4, a load rises at a time t1, the displacement angle measurement value $\theta_e$ increases and exceeds the displacement angle upper limit value $\theta_{e,max}$. Therefore, the adjustment unit 215 of the control device 20 outputs the torque command T for decreasing torque of the synchronous machine 10 at the time t1.

In addition, at a time t2, the displacement angle measurement value $\theta_e$ is equal to or smaller than the displacement angle upper limit value $\theta_{e,max}$. In this case, the adjustment unit 215 of the control device 20 outputs the torque command T to the synchronous machine 10 at the time t2 to generate torque according to a load. In the example of FIG. 4, the adjustment unit 215 of the control device 20 outputs a torque command T for increasing the torque at time point t2.

In this manner, in a case where a deviation between the displacement angle estimation value $^\wedge\theta_e$ and the displacement angle measurement value $\theta_e$ increases due to an increase in load, the drive device 1 temporarily decreases the torque of the synchronous machine 10 and adjusts the displacement angle measurement value $\theta_e$ to follow a load state to be close to the displacement angle estimation value $^\wedge\theta_e$ which is an index value. Accordingly, the drive device 1 suppresses step-out caused by the displacement angle exceeding the limit value (90 degrees).

(Actions and Effects)

As described above, the drive device 1 according to the present embodiment includes the synchronous machine 10 having the high-speed rotor 12 and the low-speed rotor 13 and the control device 20 configured to control an operation of the synchronous machine 10. The control device 20 includes the torque estimation unit 211 that estimates the torque estimation value $^\wedge\tau_m$ output by the synchronous machine 10 based on a current value of power for driving the synchronous machine 10, the displacement angle estimation unit 212 that estimates the displacement angle estimation value $^\wedge\theta_e$ between the high-speed rotor 12 and the low-speed rotor 13 based on the torque estimation value $^\wedge\tau_m$, the displacement angle measurement unit 213 that measures the displacement angle measurement value $\theta_e$ between the high-speed rotor 12 and the low-speed rotor 13, the determination unit 214 that determines whether or not a difference between the displacement angle estimation value $^\wedge\theta_e$ and the displacement angle measurement value $\theta_e$ exceeds the predetermined threshold value $\delta$, and the adjustment unit 215 that outputs the torque command T for increasing or decreasing torque of the synchronous machine 10 in a case where it is determined that the difference between the displacement angle estimation value $^\wedge\theta_e$ and the displacement angle measurement value $\theta_e$ exceeds the threshold value $\delta$.

In a case where an allowable range of a displacement angle is always fixed (for example, fixed at 80 degrees, which is 10 degrees before a static limit value of 90 degrees), there is a possibility in which a torque operation does not keep up with a sudden and large load fluctuation and step-out occurs. On the other hand, when the allowable range is set too small in order to suppress step-out, it becomes difficult to drive a large load (high load operation). However, in the drive device 1 according to the present embodiment, the allowable range of the displacement angle is not fixed and dynamically changes with the displacement angle estimation value $^\wedge\theta_e$ estimated at each time point as reference, that is, with a setting value (an operating point of the motor) in a steady state (or a quasi-steady state) as reference. Accordingly, both suppression of step-out of the high-speed rotor 12 and the low-speed rotor 13 and a high load operation can be achieved.

In addition, as described above, in Patent Document 1, since the allowable range is changed according to a temperature around a magnet coupling, in some cases, it is difficult to suppress step-out in a case where a load changes suddenly. On the other hand, the drive device 1 according to the present embodiment changes the displacement angle estimation value $^\wedge\theta_e$, which is an index, according to a change in a current value of the synchronous machine 10 and determines whether or not a difference from the actual displacement angle measurement value $\theta_e$ exceeds the threshold value $\delta$. In this manner, the drive device 1 can quickly detect an increase in a displacement angle caused by a sudden change in load.

Further, in Patent Document 1, in a case where a displacement angle exceeds an allowable range, a rotational output of a prime mover is reduced. On the other hand, since the drive device 1 according to the present embodiment changes torque of the synchronous machine 10 instead of a load (or the prime mover), step-out can be suppressed while reducing an effect on the load (or the prime mover). For example, the drive device 1 can suppress the step-out while maintaining a high load state.

In addition, in the drive device 1 according to the present embodiment, the adjustment unit 215 of the control device 20 decreases torque of the synchronous machine 10 and outputs the torque command T in a case where it is determined that the displacement angle measurement value $\theta_e$ exceeds the upper limit value $\theta_{e,max}$ obtained by adding the threshold value $\delta$ to the displacement angle estimation value $^\wedge\theta_e$ and increases the torque of the synchronous machine 10 and outputs the torque command T in a case where the displacement angle measurement value $\theta_e$ falls below the lower

limit value $\theta_{e,min}$ obtained by subtracting the threshold value $\delta$ from the displacement angle estimation value $^{\wedge}\theta_e$.

In this manner, the drive device 1 can change the upper limit value and the lower limit value of the displacement angle according to the displacement angle estimation value $^{\wedge}\theta_e$. Accordingly, the drive device 1 can accurately determine whether or not torque of the synchronous machine 10 needs to be adjusted without being overly reactive to a change in the displacement angle.

<Second Embodiment>

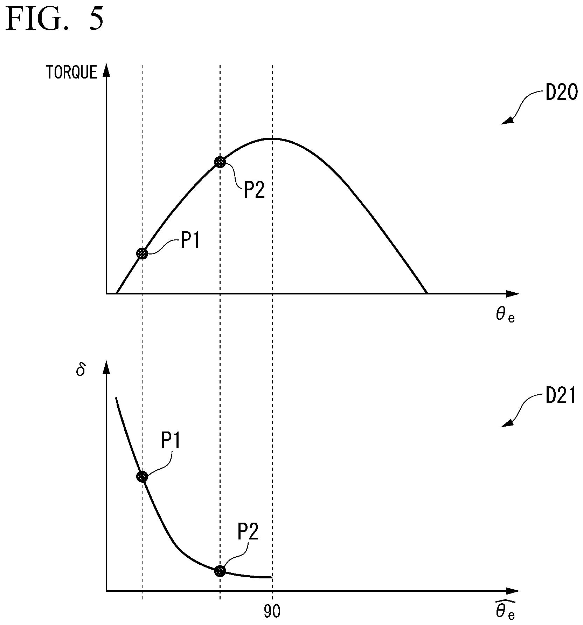

Next, the drive device 1 according to a second embodiment of the present invention will be described with reference to FIG. 5. Components common to the first embodiment will be assigned with the same reference signs, and detailed description thereof will be omitted.

In the first embodiment, the determination unit 214 of the control device 20 uses the threshold value $\delta$ as a fixed value. On the other hand, the determination unit 214 according to the present embodiment changes the threshold value $\delta$ according to a load state.

FIG. 5 is a diagram for describing functions of the control device according to the second embodiment.

FIG. 5 shows a graph D20 showing an example of displacement angle-torque characteristics and a graph D21 showing a change example of the threshold value $\delta$.

As shown in the graph D21 of FIG. 5, the determination unit 214 according to the present embodiment changes the value of the threshold value $\delta$ according to the magnitude of the displacement angle estimation value $^{\wedge}\theta e$ using a function defined in advance. In the synchronous machine 10, the torque also increases as the displacement angle $\theta_e$ increases, and the maximum transmission torque is reached when the displacement angle $\theta e$ is the limit value (90 degrees). In addition, when the displacement angle $\theta_e$ exceeds the limit value, step-out occurs. In addition, as shown in the graph D20, the synchronous machine 10 has a smaller tolerance for load fluctuations when the load is heavy (the torque is large) than when the load is light (the torque is small). That is, as the load is heavier, step-out caused by load fluctuations is more likely to occur.

For this reason, the determination unit 214 reduces the threshold value $\delta$ as the displacement angle estimation value $^{\wedge}\theta_e$ becomes closer to the limit value, as in the example of the graph D21. Accordingly, the drive device 1 can more reliably suppress step-out, for example, at a high load (an operation point P2 in FIG. 5) by sensitively reacting to the degree of deviation of the displacement angle measurement value $\theta_e$ from the displacement angle estimation value $^{\wedge}\theta_e$. On the other hand, the drive device 1 can suppress overly reacting to the degree of deviation of the displacement angle measurement value $\theta_e$ from the displacement angle estimation value $^{\wedge}\theta_e$ and can suppress unnecessary torque adjustment at a low load (an operation point P1 in FIG. 5).

The determination unit 214 may prepare a map or a table in which the displacement angle estimation value $^{\wedge}\theta_e$ and the threshold value $\delta$ are associated with each other in advance and may determine the threshold value $\delta$ with reference to the map or the table.

In this manner, since the drive device 1 can finely adjust torque according to a load state, step-out can be more reliably suppressed, and a utilization rate of the torque of the synchronous machine 10 can be improved.

<Third Embodiment>

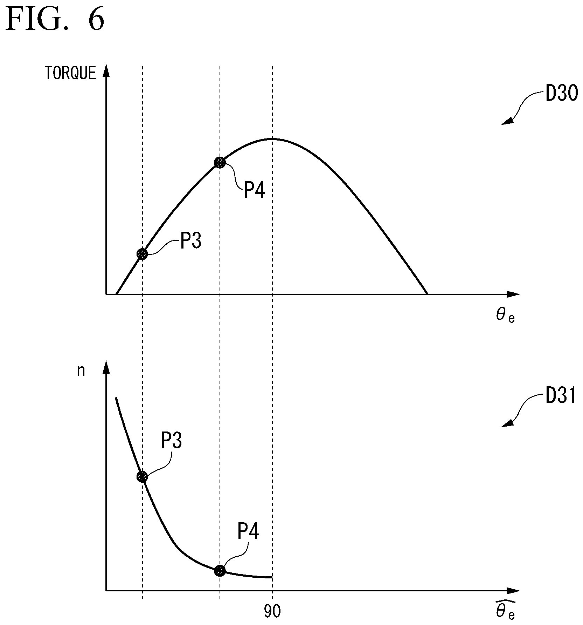

Next, the drive device 1 according to a third embodiment of the present invention will be described with reference to FIG. 6. Components common to the first and second embodiments will be assigned with the same reference signs, and detailed description thereof will be omitted.

The determination unit 214 of the control device 20 according to the first embodiment determines whether or not a difference between the displacement angle measurement value $\theta_e$ and the displacement angle estimation value $^{\wedge}\theta_e$ at each time point exceeds the threshold value $\delta$ every time each measurement value is measured (acquired). On the other hand, the determination unit 214 according to the present embodiment determines whether or not a difference between moving average values of the displacement angle measurement value $\theta_e$ and the displacement angle estimation value $^{\wedge}\theta_e$ exceeds the threshold value $\delta$.

Specifically, the displacement angle estimation value $^{\wedge}\theta_e$ at each time estimated by the displacement angle estimation unit 212 and the displacement angle measurement value $\theta_e$ at each time measured by the displacement angle measurement unit 213 are recorded in the storage 23. In step S14 of FIG. 3, the determination unit 214 calculates a displacement angle upper limit value and a displacement angle lower limit value based on a moving average value of the displacement angle estimation values $^{\wedge}\theta_e$ for the past n seconds from a determination time point and the threshold value $\delta$. In addition, in step S15 of FIG. 3, the determination unit 214 determines whether or not the moving average value of the displacement angle measurement values $\theta_e$ for the past n seconds from the determination time point exceeds the displacement angle upper limit value. Similarly, in step S17 of FIG. 3, the determination unit 214 determines whether or not the moving average value of the displacement angle measurement values $\theta_e$ for the past n seconds from the determination time point falls below the displacement angle lower limit value.

In this manner, the drive device 1 can suppress erroneous determination that a difference between the displacement angle measurement value $\theta_e$ and the displacement angle estimation value $^\wedge\theta_e$ exceeds the threshold value $\delta$ caused by an effect of noise, a measurement error, or the like.

The determination unit 214 may use an averaging time of n seconds as a fixed value or may use the averaging time as a variable.

FIG. 6 is a diagram for describing functions of the control device according to the third embodiment.

FIG. 6 shows a graph D30 showing an example of displacement angle-torque characteristics and a graph D31 showing a change example of an averaging time n.

As shown in the graph D31 of FIG. 6, the determination unit 214 may use a function defined in advance to make the averaging time n (seconds) in the case of the moving average variable according to a load state. For example, the determination unit 214 shortens the averaging time n as the displacement angle estimation value $^\wedge\theta_e$ becomes closer to the limit value.

The determination unit 214 may prepare a map or a table in which the displacement angle estimation value $^\wedge\theta_e$ and the averaging time n are associated with each other in advance and may determine the averaging time n with reference to the map or the table.

In this manner, the drive device 1 can suppress erroneous determination caused by an effect of noise, a measurement error, or the like by lengthening the averaging time n at a low load (an operation point P3 in FIG. 6). In addition, the drive device 1 can suppress a determination delay affected by past data before load fluctuations by shortening the averaging time n at a high load (an operation point P4 in FIG. 6).

Although an example in which the determination unit 214 performs determination based on the moving average values of the displacement angle measurement values $\theta_e$ and the displacement angle estimation values $^\wedge\theta_e$ has been described in the present embodiment, the present invention is not limited thereto. In other embodiments, the determination unit 214 may determine whether or not a state where a difference between the displacement angle measurement value $\theta_e$ and the displacement angle estimation value $^\wedge\theta_e$ exceeds the threshold value $\delta$ continues for a determination time n (seconds) or more. In addition, the determination unit 214 may change the determination time n according to the displacement angle estimation value $^\wedge\theta_e$, like the averaging time n.

Even in such an aspect, the drive device 1 can suppress erroneous determination caused by an effect of noise, a measurement error, or the like.

<Fourth Embodiment>

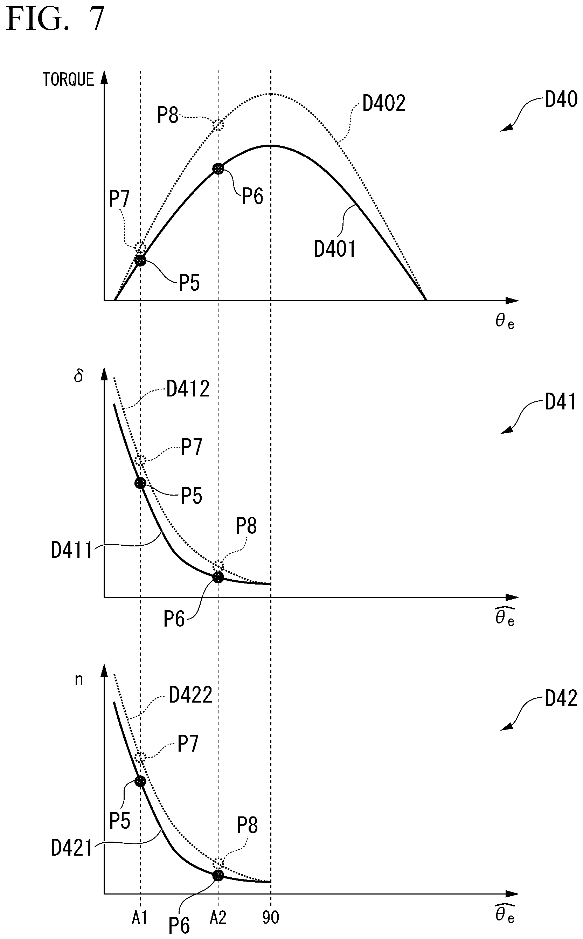

Next, the drive device 1 according to a fourth embodiment of the present invention will be described with reference to FIG. 7. Components common to the first to third embodiments will be assigned with the same reference signs, and detailed description thereof will be omitted.

In the second embodiment, an example in which the determination unit 214 changes the threshold value $\delta$ according to the displacement angle estimation value $^\wedge\theta_e$ has been described. In addition, in the third embodiment, an example in which the determination unit 214 changes the averaging time n (determination time n) according to the displacement angle estimation value $^\wedge\theta_e$ has been described. On the other hand, the determination unit 214 according to the present embodiment changes at least one of the threshold value $\delta$ and the averaging time n (determination time n) further based on a state amount affecting maximum transmission torque.

In addition, the acquisition unit 210 according to the present embodiment further acquires a state amount that affects maximum transmission torque of the synchronous machine 10. Examples of the state amount that affects the maximum transmission torque include a coil temperature of the stator 11, each gap distance between the stator 11, the high-speed rotor 12, and the low-speed rotor 13, operation history (load-time characteristics or the like), and an operation plan. In addition, although a design value (initial value) may be used as the gap distance, an estimation value or an actual measurement value corresponding to a using period of the synchronous machine 10 may be used in consideration of a change caused by aging deterioration.

FIG. 7 is a diagram for describing functions of the control device according to the fourth embodiment.

FIG. 7 shows a graph D40 showing an example of displacement angle-torque characteristics, a graph D41 showing a change example of the threshold value $\delta$, and a graph D42 showing a change example of the averaging time n (or the determination time n).

Herein, an example in which the coil temperature of the stator 11 is used as the state amount will be described. In the graph D41, D401 represents displacement angle-torque characteristics when the coil temperature is high, and D402 represents displacement angle-torque characteristics when the coil temperature is low. The type of the state amount and the displacement angle-torque characteristics for each magnitude are recorded in the storage 23 in advance. As shown in the graph D40, the maximum transmission torque is larger when the coil temperature is low than when the coil temperature is high. In addition, when the same load is applied, as the maximum transmission torque increases, a margin until step-out increases.

In consideration of such characteristics, the determination unit 214 prepares a function for determining the threshold value δ for each temperature range of the coil temperature, for example, as shown in the graph D41 of FIG. 7. Although two functions are given as examples in FIG. 7, the determination unit 214 may prepare three or more functions. The determination unit 214 determines the threshold value δ using a function corresponding to the coil temperature acquired by the acquisition unit 210. These functions are set such that the threshold value δ is larger when the coil temperature is low (operation point P7) than when the coil temperature is high (operation point P5) even in a case where the displacement angle is the same (for example, A1).

In this manner, the determination unit 214 can appropriately adjust the threshold value δ based on the magnitude of the maximum transmission torque according to the state amount and the displacement angle estimation value $^\wedge\theta_e$.

The determination unit 214 may prepare a map or a table in which a state amount (coil temperature), the displacement angle estimation value $^\wedge\theta_e$, and the threshold value δ are associated with each other in advance and may determine the threshold value δ with reference to the map or the table.

Further, the determination unit 214 may perform determination based on moving average values of the displacement angle measurement value $\theta_e$ and the displacement angle estimation value $^\wedge\theta_e$, as in the third embodiment. In addition, it may be determined whether or not a difference between the displacement angle measurement value $\theta_e$ and the displacement angle estimation value $^\wedge\theta_e$ exceeds the determination time n. At this time, the determination unit 214 may change the averaging time n or the determination time n according to the state amount.

As described above, when the same load is applied, as the maximum transmission torque increases, the margin until step-out increases. In consideration of such characteristics, the determination unit 214 prepares a function for determining the averaging time n (or the determination time n) for each temperature range of the coil temperature, as shown in the graph D42 of FIG. 7. Although two functions are given as examples in FIG. 7, the determination unit 214 may prepare three or more functions. The determination unit 214 determines the averaging time n (or the determination time n) using a function corresponding to the coil temperature acquired by the acquisition unit 210. These functions are set such that the averaging time n (or the determination time n) is longer when the coil temperature is low (operation point P7) than when the coil temperature is high (operation point P5) even in a case where the displacement angle is the same (for example, A1).

In this manner, the determination unit 214 can appropriately adjust the averaging time n (or the determination time n) by using the magnitude of maximum transmission torque according to the state amount and the displacement angle estimation value $^\wedge\theta_e$.

The determination unit 214 may prepare a map or a table in which the state amount (coil temperature), the displacement angle estimation value $^\wedge\theta_e$, and the averaging time n (or the determination time n) are associated with each other in advance and may determine the averaging time n (or the determination time n) with reference to the map or the table.

The determination unit 214 may change both the threshold value δ and the averaging time n (or the determination time n) according to the state amount or may change only one of the threshold value δ and the averaging time n (or the determination time n).

As described above, the drive device 1 can more reliably suppress step-out by finely adjusting torque according to the state amount of the synchronous machine 10 in addition to a load state and can improve the utilization rate of the torque of the synchronous machine 10.

<Fifth Embodiment>

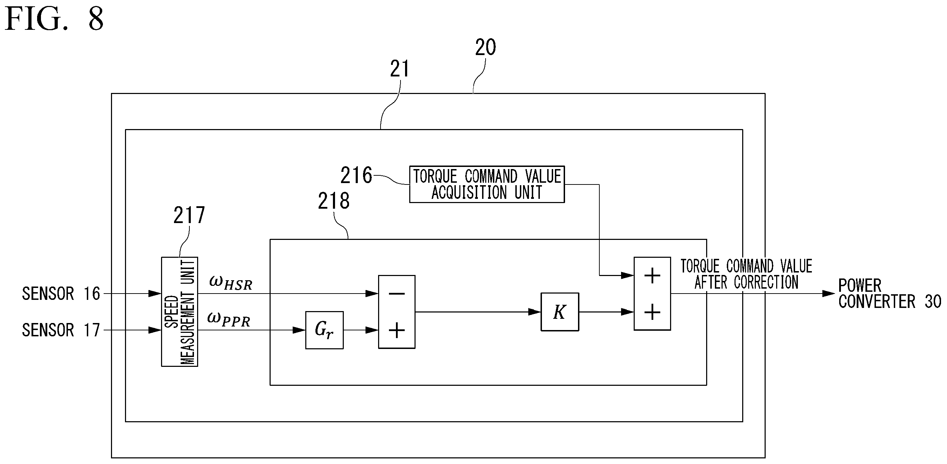

Next, the drive device 1 according to a fifth embodiment of the present invention will be described with reference to FIG. 8. Components common to the first to fourth embodiments will be assigned with the same reference signs, and detailed description thereof will be omitted. In the drive device 1 according to the present embodiment, the control device 20 performs control to suppress a change in the displacement angle between the high-speed rotor 12 and the low-speed rotor 13 with respect to a load change.

(Functional Configuration of Control Device)

FIG. 8 is a block diagram showing a functional configuration of the control device according to the fifth embodiment.

As shown in FIG. 8, the processor 21 of the control device 20 according to the present embodiment operates in accordance with a predetermined program to exhibit functions as a torque command value acquisition unit 216, a speed measurement unit 217, and a torque command value correction unit 218.

The torque command value acquisition unit 216 acquires a torque command value for adjusting torque output by the synchronous machine 10. The torque command value is generated by existing torque control means of the control device 20 according to a state of a load connected to the synchronous machine 10 or the like.

The speed measurement unit 217 measures rotation speeds of the high-speed rotor 12 and the low-speed rotor 13 through the first sensor 16 and the second sensor 17. In the present embodiment, the speed measurement unit 217 measures an angular speed [rad/s] of each of both rotors.

The torque command value correction unit 218 corrects a torque command value by calculating, in proportion to a speed difference between the high-speed rotor 12 and the low-speed rotor 13, a torque correction amount for attenuating a magnetic displacement angle between the high-speed rotor 12 and the low-speed rotor 13.

(Regarding Correction Processing of Torque Command Value)

Next, details of correction processing of a torque command value by the control device 20 will be described with reference to FIG. 8. When the angular speed of the high-speed rotor 12 is defined as $\omega_{HSR}$, the angular speed of the low-speed rotor 13 is defined as $\omega_{PPR}$, and a gear ratio between both rotors is defined as $G_r$, a relationship of Equation (4) is established while the high-speed rotor 12 and the low-speed rotor 13 are synchronized.

$$\omega_{PPR} \times G_r = \omega_{HSR} \qquad \cdots (4)$$

Accordingly, when a deviation occurs between the high-speed rotor 12 and the low-speed rotor 13, the same effect as increasing torsional damping of rotors can be obtained in a case where torque obtained through Equation (5) is output from the synchronous machine 10. K is a gain and determines the magnitude of torsional damping of rotors to be applied.

$$K(\omega_{PPR} \times G_r - \omega_{HSR}) \qquad \cdots (5)$$

Specifically, the torque command value correction unit 218 of the control device 20 first calculates a speed difference $\Delta\omega$ between a value obtained by multiplying the angular speed measurement value $\omega_{PPR}$ of the low-speed rotor 13 by the gear ratio Gr between the high-speed rotor 12 and the low-speed rotor 13 and the angular speed measurement value $\omega_{HSR}$ of the high-speed rotor 12.

Next, the torque command value correction unit 218 calculates a torque correction amount by multiplying the speed difference $\Delta\omega$ between both rotors by the gain K. For example, in a case where a load increases and the angular speed of the low-speed rotor 13 decreases, the torque command value correction unit 218 calculates a torque correction amount for reducing torque output by the synchronous machine 10. Accordingly, an increase in a relative speed difference (a change speed of a displacement angle) between the high-speed rotor 12 and the low-speed rotor 13 can be suppressed, and occurrence of step-out can be suppressed.

In the present embodiment, the value of the gain K is a fixed value (for example, "5.0") set in advance according to characteristics, operating conditions, and the like of the synchronous machine 10. As the value of the gain K increases, torsional damping of rotors can be increased.

In addition, the torque command value correction unit 218 outputs, to the power converter 30, a corrected torque command value obtained by summing the calculated torque correction amount and the torque command value acquired by the torque command value acquisition unit 216.

(Actions and Effects)

As described above, in the drive device 1 according to the present embodiment, the control device 20 includes the torque command value acquisition unit 216 that acquires a torque command value for adjusting torque output by the synchronous machine 10, the speed measurement unit 217 that measures angular speeds of the high-speed rotor 12 and the low-speed rotor 13, and the torque command value correction unit 218 that corrects the torque command value by calculating, in proportion to a speed difference between the high-speed rotor 12 and the low-speed rotor 13, a torque correction amount for attenuating a change speed of a magnetic displacement angle between the high-speed rotor 12 and the low-speed rotor 13.

In this manner, the drive device 1 can provide torsional damping of rotors with respect to magnetic displacement between the high-speed rotor 12 and the low-speed rotor 13 by adjusting torque output by the synchronous machine 10. As a result, the drive device 1 can suppress occurrence of step-out by making the displacement angle between the high-speed rotor 12 and the low-speed rotor 13 unlikely to be changed.

In addition, in order to effectively apply torsional damping of rotors, a phase (timing) of a change in a rotation speed needs to be accurately measured. For example, in the method described in Patent Document 2 described above, when a large deviation occurs from the operating point (equilibrium point) of linearization, such as a case where a large load change occurs, it becomes difficult to correctly estimate the rotation speed. For example, in a case where there is an error in the estimation of the rotation speed, negative attenuation occurs in an extreme case where the phase is deviated by 180 degrees, and shaft displacement vibration is increased.

On the other hand, since the drive device 1 according to the present embodiment directly measures rotation speeds (angular speeds) of the high-speed rotor 12 and the low-speed rotor 13 through the first sensor 16 and the second sensor 17 without estimation, the rotation speeds can be accurately measured even in a case where a large load change occurs. For this reason, the drive device 1 can obtain appropriate torsional damping of rotors according to a speed difference between the high-speed rotor 12 and the low-speed rotor 13.

Further, in the method described in Patent Document 1 described above, a displacement angle, which is a difference between rotation angles of the high-speed rotor and the low-speed rotor, is monitored, and a load is adjusted to suppress step-out in a case where the displacement angle exceeds the threshold value, that is, in a case where a sign of step-out is detected. At this time, when the threshold value is small, there is a possibility in which step-out is likely to occur in a case where there is a load change at a high load. In addition, when the threshold value is large, excessive load adjustment occurs at a low load, and there is a possibility in which motor efficiency decreases.

On the other hand, the drive device 1 according to the present embodiment corrects a torque command value (applies torsional damping of rotors) according to a speed difference between the high-speed rotor 12 and the low-speed rotor 13 to suppress step-out. Therefore, correction control of the torque command value may be always performed during the operation of the drive device 1. This is because, in a case where the high-speed rotor 12 and the low-speed rotor 13 are synchronized (the speed difference is close to zero), Equation (6) is satisfied, and thus the same effect as that of turning off the correction control can be obtained.

$$\omega_{PPR} \times G_r - \omega_{HSR} \approx 0 \qquad \cdots (6)$$

Therefore, the control device 20 according to the present embodiment can omit complicated processing such as processing of detecting a sign of step-out and adjustment of a threshold value.

In addition, in the drive device 1 according to the present embodiment, the torque command value correction unit 218 of the control device 20 calculates a torque correction amount by multiplying a speed difference between the high-speed rotor 12 and the low-speed rotor 13 by the predetermined gain K.

In this manner, the drive device 1 can adjust the magnitude of torsional damping of rotors with the value of the gain K.

<Sixth Embodiment>

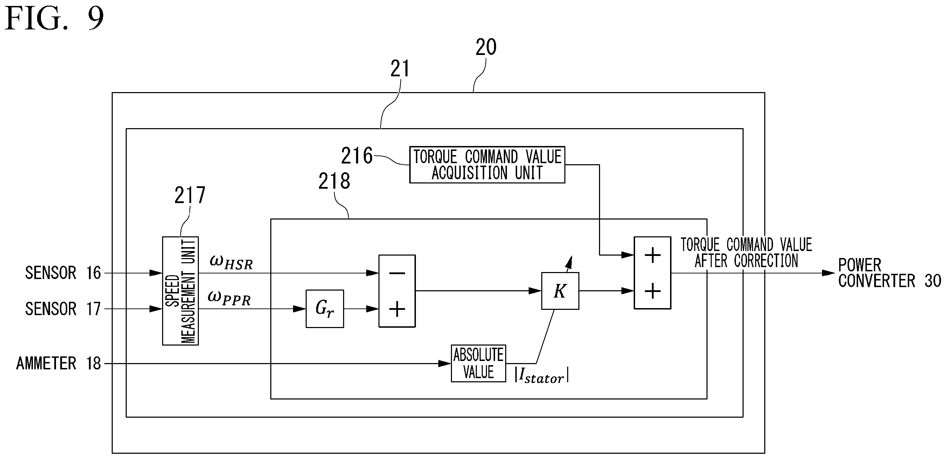

Next, the drive device 1 according to a sixth embodiment of the present invention will be described with reference to FIGS. 9 to 11. Components common to the first to fifth embodiments will be assigned with the same reference signs, and detailed description thereof will be omitted.

FIG. 9 is a first block diagram showing a functional configuration of the control device according to the sixth embodiment.

As shown in FIG. 9, in the control device 20 according to the present embodiment, the torque command value correction unit 218 makes the value of the gain K variable according to a load.

The magnitude of the load is correlated with the magnitude of a current (stator current value) flowing in the stator 11 of the synchronous machine 10. For this reason, the torque command value correction unit 218 changes the value of the gain K according to the magnitude of an absolute value $|I_{stator}|$ of the stator current value acquired from the ammeter 18.

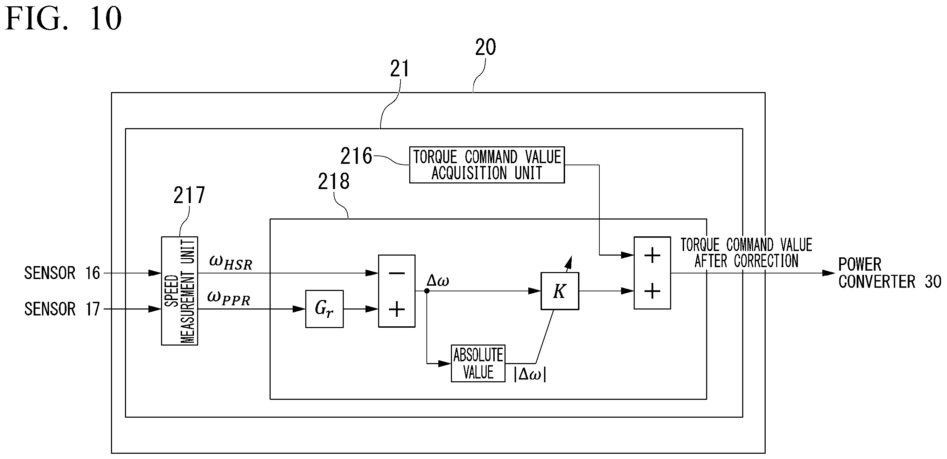

FIG. 10 is a second block diagram showing a functional configuration of the control device according to the sixth embodiment.

In addition, as shown in FIG. 10, the torque command value correction unit 218 may change the value of the gain K according to the absolute value $|\Delta\omega|$ of a speed difference between the high-speed rotor 12 and the low-speed rotor 13.

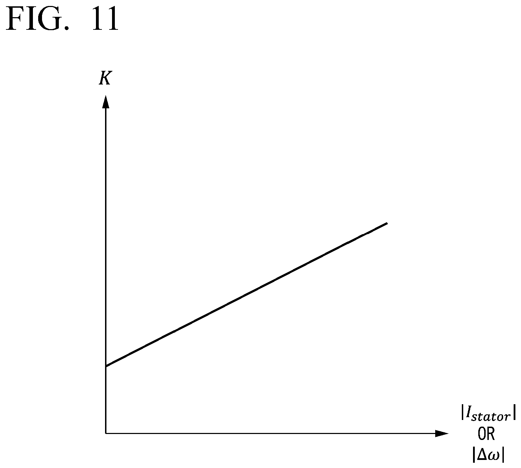

FIG. 11 is a diagram showing an example of a variable gain according to the sixth embodiment.

The synchronous machine 10 has a smaller tolerance for load fluctuations when a load is heavy than when the load is light. That is, as the load is heavier, step-out caused by load fluctuations is more likely to occur. For this reason, in a case where the value of the gain K is changed according to the load, the torque command value correction unit 218 increases the value of the gain K as the absolute value $|I_{stator}|$ of the stator current value increases (the load is heavier), as shown in FIG. 11.

In addition, in the synchronous machine 10, as a speed difference between both rotors increases, a displacement angle increases, and step-out caused by load fluctuations is likely to occur. For this reason, in a case where the value of the gain K is changed according to the speed difference, the torque command value correction unit 218 increases the value of the gain K as the absolute value $|\Delta\omega|$ of the speed difference increases, as shown in FIG. 11.

As described above, in the drive device 1 according to the present embodiment, the torque command value correction unit 218 of the control device 20 changes the value of the gain K according to the magnitude of a load or a speed difference between the high-speed rotor 12 and the low-speed rotor 13.

In this manner, the drive device 1 can effectively obtain torsional damping of rotors even when nonlinearity of the magnetic gear, that is, a restoring force of a magnetic spring changes according to an operating point.

For example, in the drive device 1, as the load is heavier, the gain K is increased so that torsional damping of rotors can be increased. Therefore, even during a high load operation in which step-out is likely to occur due to load fluctuations, step-out can be effectively suppressed. On the other hand, torsional damping of rotors hinders motion of the system. For this reason, in a case where the load is light (a tolerance for load fluctuations is relatively great), the drive device 1 can suppress a performance decrease caused by torsional damping of rotors by reducing the gain K.

In addition, for example, in a case where the speed difference increases due to sudden load fluctuations, the drive device 1 can effectively suppress step-out by increasing the gain K to strongly apply torsional damping of rotors. On the other hand, in a case where the speed difference is small, that is, in a case where a load is stable and rotation speeds of both rotors are stable, it is desirable that torsional damping of rotors is 0. For this reason, the drive device 1 can suppress a performance decrease of the synchronous machine 10 caused by the torsional damping of rotors by reducing the gain K, assuming that the system is in a stable state when the speed difference is small.

That is, the control device 20 can achieve both the performance and stability (unlikeliness of occurrence of step-out) of the synchronous machine 10 by making torsional damping of rotors stronger or weaker according to the state of the system.

In the example of FIG. 11, the torque command value correction unit 218 defines a function indicating a relationship between the absolute value $|I_{stator}|$ of the stator current value or the absolute value $|\Delta\omega|$ of the speed difference and a value of the gain K in advance and determines the value of the gain K based on the function. However, the present invention is not limited thereto. In other embodiments, the torque command value correction unit 218 may prepare a table in advance in which the absolute value $|I_{stator}|$ of the stator current value or the absolute value $|\Delta\omega|$ of the speed difference and the value of the gain K are associated with each other and may determine the value of the gain K with reference to the table. In addition, the torque command value correction unit 218 may set a specific range of the absolute value $|I_{stator}|$ of the stator current value or the absolute value $|\Delta\omega|$ of the speed difference as an insensitive zone (gain K = 0).

<Seventh Embodiment>

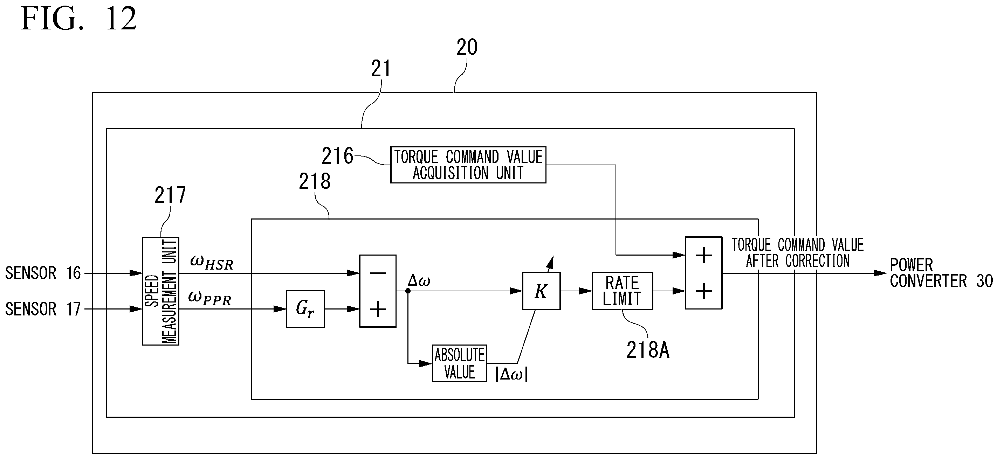

Next, the drive device 1 according to a seventh embodiment of the present invention will be described with reference to FIG. 12. Components common to the first to sixth embodiments will be assigned with the same reference signs, and detailed description thereof will be omitted.

FIG. 12 is a block diagram showing a functional configuration of the control device according to the seventh embodiment.

As shown in FIG. 12, in the control device 20 according to the present embodiment, the torque command value correction unit 218 has a rate limit unit 218A.

The rate limit unit 218A limits a change rate of a torque correction amount calculated by the torque command value correction unit 218. The rate limit unit 218A performs processing of gradually increasing the torque correction amount in a case where the torque correction amount exceeding a predetermined change rate is required in order to suppress a sudden change in torque.

Although FIG. 12 shows an example in which the rate limit unit 218A is added to the configuration (FIG. 10) using the variable gain K according to the speed difference in the sixth embodiment, the present invention is not limited thereto. In other embodiments, the rate limit unit 218A may be added to the configuration using the fixed gain K in the fifth embodiment (FIG. 8) or the configuration using the variable gain K according to the magnitude of a load in the sixth embodiment (FIG. 9).

The change rate may be a fixed value defined in advance or may be variable. For example, the rate limit unit 218A may change the change rate according to the speed difference $\Delta\omega$ between the high-speed rotor 12 and the low-speed rotor 13.

As described above, in the drive device 1 according to the present embodiment, the torque command value correction unit 218 of the control device 20 has the rate limit unit 218A that limits a change rate of a torque correction amount.

In this manner, the drive device 1 can suppress a sudden change in the torque of the synchronous machine 10 when torque adjustment is performed for suppression of step-out.

In addition, the rate limit unit 218A changes a change rate according to a speed difference between the high-speed rotor 12 and the low-speed rotor 13.

In this manner, in a case where the speed difference is large and quick response is required, the drive device 1 can quickly obtain an effect of suppression of step-out by increasing a change rate of a torque correction amount. On the other hand, in a case where there is a relatively large margin until the occurrence of step-out with a small speed difference, a sudden change in the torque can be suppressed.

<Eighth Embodiment>

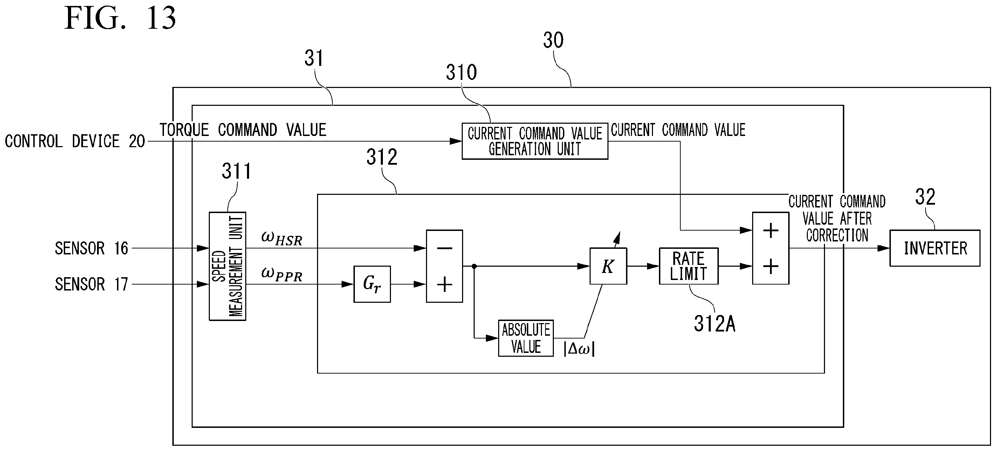

Next, the drive device 1 according to an eighth embodiment of the present invention will be described with reference to FIG. 13. Components common to the first to seventh embodiments will be assigned with the same reference signs, and detailed description thereof will be omitted.
In the fifth to seventh embodiments, an example in which the control device 20 performs processing of correcting a torque command value for suppression of step-out has been described. On the other hand, in the present embodiment, an example in which the power converter 30 corrects a current command value for suppression of step-out will be described.

(Functional Configuration of Power Converter)

FIG. 13 is a block diagram showing a functional configuration of the power converter according to the eighth embodiment.
As shown in FIG. 13, the power converter 30 includes a processor 31 and an inverter 32.
The processor 31 operates in accordance with a predetermined program to exhibit functions as a current command value generation unit 310, a speed measurement unit 311, and a current command value correction unit 312.
The current command value generation unit 310 generates a current command value according to a torque command value input from the control device 20.
The speed measurement unit 311 measures rotation speeds of the high-speed rotor 12 and the low-speed rotor 13 through the first sensor 16 and the second sensor 17. In the present embodiment, the speed measurement unit 311 measures an angular speed [rad/s] of each of both rotors.
The current command value correction unit 312 corrects a current command value by calculating, in proportion to a speed difference between the high-speed rotor 12 and the low-speed rotor 13, a current correction amount for attenuating a displacement angle between the high-speed rotor 12 and the low-speed rotor 13.
The inverter 32 adjusts power input and output between the synchronous machine 10 and the power converter 30 based on the corrected current command value.

(Regarding Correction Processing of Current Command Value)

Next, details of correction processing of a current command value by the power converter 30 will be described with reference to FIG. 13.
First, the current command value generation unit 310 of the power converter 30 generates a current command value based on a torque command value input from the control device 20. Since a method of generating a current command value from a torque command value is known, description thereof will be omitted. The torque command value input to the power converter 30 is a corrected torque command value through any of the configurations of the fifth to seventh embodiments.
In addition, the speed measurement unit 311 acquires the angular speed measurement value $\omega_{HSR}$ of the high-speed rotor 12 and the angular speed measurement value $\omega_{PPR}$ of the low-speed rotor 13. Then, the current command value correction unit 312 calculates the speed difference $\Delta\omega$ between a value obtained by multiplying the angular speed measurement value $\omega_{PPR}$ of the low-speed rotor 13 by the gear ratio Gr and the angular speed measurement value $\omega_{HSR}$ of the high-speed rotor 12.
Next, the current command value correction unit 312 calculates a current correction amount by multiplying the speed difference $\Delta\omega$ between both rotors by the gain K. In the example of FIG. 13, the gain K is a variable value according to the absolute value $|\Delta\omega|$ of the speed difference, but may be a variable value according to the magnitude of the absolute value $|I_{stator}|$ of a stator current value. A method of obtaining the value of the variable gain K is the same as in the sixth embodiment. In addition, in other embodiments, the gain K may be a fixed value.
In addition, the current command value correction unit 312 outputs, to the inverter 32, a corrected current command value obtained by summing a calculated current correction amount and a current command value generated by the current command value generation unit 310.
The current command value correction unit 312 may have a rate limit unit 312A as in the example of FIG. 13 and may limit a change rate of a calculated current correction amount. The change rate may be a fixed value defined in advance or may be variable. For example, the rate limit unit 312A may change the change rate according to the speed difference $\Delta\omega$ between the high-speed rotor 12 and the low-speed rotor 13. In addition, in other embodiments, the rate limit unit 312A may be omitted.
The inverter 32 adjusts power input and output between the synchronous machine 10 and the power converter 30 based on the corrected current command value. Specifically, in a case where the synchronous machine 10 functions as an electric motor, the inverter 32 adjusts power supplied to the stator 11 of the synchronous machine 10 based on the corrected current command value. In addition, in a case where the synchronous machine 10 functions as a generator, the inverter 32 adjusts output power of the synchronous machine 10 based on the corrected current command value.

(Actions and Effects)

As described above, in the drive device 1 according to the present embodiment, the power converter 30 includes the current command value generation unit 310 that generates a current command value according to a torque command value input from the control device 20, the speed measurement unit 311 that measures rotation speeds (angular speeds) of the high-speed rotor 12 and the low-speed rotor 13, the current command value correction unit 312 that corrects the current command value by calculating, in proportion to a speed difference between the high-speed rotor 12 and the low-speed rotor 13, a current correction amount for attenuating a displacement angle between the high-speed rotor 12 and the low-speed rotor 13, and the inverter 32 that adjusts power input and output into and from the synchronous machine based on the corrected current command value.

In general, the power converter 30 is closer to the synchronous machine 10, which is a control target, than the higher-level control device 20 and performs control calculation at a high speed. For this reason, as the power converter 30 corrects a current command value, an effect of suppression of step-out can be obtained more quickly by reducing an effect of a communication delay or a calculation delay, compared to a case where a command is given from the control device 20.

As described above, although some embodiments according to the present disclosure have been described, all of these embodiments are presented as examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

<Appendix>

The drive device and a method for controlling a drive device described in the embodiments described above are understood as follows, for example.

(1) According to the first aspect of the present disclosure, the drive device 1 includes the synchronous machine 10 that has the high-speed rotor 12 and the low-speed rotor 13, and the control device 20 configured to control an operation of the synchronous machine 10. The control device 20 includes a torque estimation unit 211 that estimates a torque output by the synchronous machine 10 based on a current value of power for driving the synchronous machine 10, a displacement angle estimation unit 212 that estimates a magnetic displacement angle between the high-speed rotor 12 and the low-speed rotor 13 based on an estimation value of the torque, a displacement angle measurement unit 213 that measures the displacement angle between the high-speed rotor 12 and the low-speed rotor 13, a determination unit 214 that determines whether or not a difference between the estimation value and the measurement value of the displacement angle exceeds a predetermined threshold value, and an adjustment unit 215 that outputs a torque command for increasing or decreasing the torque of the synchronous machine 10 in a case where it is determined that the difference exceeds the threshold value.

In this manner, the drive device 1 can quickly detect an increase in a displacement angle caused by a sudden change in load. In addition, since the drive device 1 changes the torque of the synchronous machine 10, the step-out can be suppressed while reducing the influence on the load (or the motor). For example, the drive device 1 can suppress the step-out while maintaining a high load state.

(2) According to the second aspect of the present disclosure, in the drive device 1 according to the first aspect, the adjustment unit 215 outputs a torque command for decreasing the torque of the synchronous machine 10 in a case where the measurement value of the displacement angle is determined to exceed an upper limit value obtained by adding the threshold value to the estimation value of the displacement angle, and a torque command for increasing the torque of the synchronous machine 10 in a case where the measurement value of the displacement angle falls below a lower limit value obtained by subtracting the threshold value from the estimation value of the displacement angle.

In this manner, the drive device 1 can change the upper limit value and the lower limit value of the displacement angle according to the displacement angle estimation value. Accordingly, the drive device 1 can accurately determine whether or not torque of the synchronous machine 10 needs to be adjusted without being overly reactive to a change in the displacement angle.

(3) According to the third aspect of the present disclosure, in the drive device 1 according to the first or second aspect, the determination unit 214 changes the value of the threshold value based on the estimation value of the displacement angle.

In this manner, since the drive device 1 can finely adjust torque according to a load state, step-out can be more reliably suppressed, and a utilization rate of the torque of the synchronous machine 10 can be improved.

(4) According to the fourth aspect of the present disclosure, in the drive device 1 according to any one of the first to third aspects, the determination unit 214 determines that the threshold value is exceeded in a case where a difference between a moving average value of the estimation value of the displacement angle and a moving average value of the measurement value of the displacement angle exceeds the threshold value, or in a case where a state where a difference between the estimation value of the displacement angle and the measurement value of the displacement angle exceeds the threshold value continues for a determination time or longer.

In this way, the drive device 1 can suppress erroneous determination that the difference between the displacement angle measurement value and the displacement angle estimation value exceeds the threshold value due to the influence of noise, measurement error, or the like.

(5) According to the fifth aspect of the present disclosure, in the drive device 1 according to the fourth aspect, the determination unit 214 changes a length of an averaging time of the moving average value or a length of a determination time based on the state amount that affects the maximum transmission torque of the synchronous machine 10.

In this way, the determination unit 214 can appropriately adjust the averaging time or the determination time by the magnitude of the maximum transmission torque corresponding to the state amount and the displacement angle estimation value.

(6) According to the sixth aspect of the present disclosure, in the drive device 1 according to any one of the first to fifth aspects, the determination unit 214 changes the value of the threshold value based on the state amount that affects the maximum transmission torque of the synchronous machine 10.

In this way, the determination unit 214 can appropriately adjust the threshold value by the magnitude of the maximum transmission torque corresponding to the state amount and the displacement angle estimation value.

(7) According to the seventh aspect of the present disclosure, a method for controlling a drive device 1 including a synchronous machine 10 that has a high-speed rotor 12 and a low-speed rotor 13, and a control device 20 configured to control an operation of the synchronous machine 10, the method includes a step of estimating a torque output by the synchronous machine 10 based on a current value of power for driving the synchronous machine 10, a step of estimating a magnetic displacement angle between the high-speed rotor 12 and the low-speed rotor 13 based on an estimation value of the torque, a step of measuring the displacement angle between the high-speed rotor 12 and the low-speed rotor 13, a step of determining whether or not a difference between the estimation value and a measurement value of the displacement angle exceeds a predetermined threshold value, and a step of outputting a torque command for increasing or decreasing the torque of the synchronous machine 10 in a case where it is determined that the difference exceeds the threshold value.

INDUSTRIAL APPLICABILITY

According to the above-described aspect, it is possible to suppress the step-out even in a case where the displacement angle changes rapidly.

REFERENCE SIGNS LIST

1 Drive device
10 Synchronous machine
11 Stator
12 High-speed rotor
13 Low-speed rotor
20 Control device
21 Processor
210 Acquisition unit
211 Torque estimation unit
212 Displacement angle estimation unit
213 Displacement angle measurement unit
214 Determination unit
215 Adjustment unit

216 Torque command value acquisition unit
217 Speed measurement unit
218 Torque command value correction unit
218A Rate limit unit
22 Memory
23 Storage
24 Interface
30 Power converter
31 Processor
310 Current command value generation unit
311 Speed measurement unit
312 Current command value correction unit
312A Rate limit unit
32 Inverter

**Claims**

1. A drive device comprising:

   a synchronous machine that has a high-speed rotor and a low-speed rotor; and
   a control device configured to control an operation of the synchronous machine,
   wherein the control device includes

      a torque estimation unit that estimates a torque output by the synchronous machine based on a current value of power for driving the synchronous machine,
      a displacement angle estimation unit that estimates a magnetic displacement angle between the high-speed rotor and the low-speed rotor based on an estimation value of the torque,
      a displacement angle measurement unit that measures the displacement angle between the high-speed rotor and the low-speed rotor,
      a determination unit that determines whether or not a difference between an estimation value and a measurement value of the displacement angle exceeds a predetermined threshold value, and
      an adjustment unit that outputs a torque command for increasing or decreasing the torque of the synchronous machine in a case where it is determined that the difference exceeds the threshold value.

2. The drive device according to Claim 1,
   wherein the adjustment unit outputs

      a torque command for decreasing the torque of the synchronous machine in a case where the measurement value of the displacement angle is determined to exceed an upper limit value obtained by adding the threshold value to the estimation value of the displacement angle, and
      a torque command for increasing the torque of the synchronous machine in a case where the measurement value of the displacement angle falls below a lower limit value obtained by subtracting the threshold value from the estimation value of the displacement angle.

3. The drive device according to Claim 1,
   wherein the determination unit changes a value of the threshold value based on the estimation value of the displacement angle.

4. The drive device according to Claim 1,
   wherein the determination unit determines that the threshold value is exceeded in a case where a difference between a moving average value of the estimation value of the displacement angle and a moving average value of the measurement value of the displacement angle exceeds the threshold value, or in a case where a state where a difference between the estimation value of the displacement angle and the measurement value of the displacement angle exceeds the threshold value continues for a determination time or longer.

5. The drive device according to Claim 4,
   wherein the determination unit changes a length of an averaging time of the moving average value or a length of the determination time based on a state amount that affects a maximum transmission torque of the synchronous machine.

6. The drive device according to any one of Claims 1 to 5,
wherein the determination unit changes a value of the threshold value based on a state amount that affects a maximum transmission torque of the synchronous machine.

7. A method for controlling a drive device including a synchronous machine that has a high-speed rotor and a low-speed rotor, and a control device configured to control an operation of the synchronous machine, the method comprising:

a step of estimating a torque output by the synchronous machine based on a current value of power for driving the synchronous machine;
a step of estimating a magnetic displacement angle between the high-speed rotor and the low-speed rotor based on an estimation value of the torque;
a step of measuring the displacement angle between the high-speed rotor and the low-speed rotor;
a step of determining whether or not a difference between an estimation value and a measurement value of the displacement angle exceeds a predetermined threshold value; and
a step of outputting a torque command for increasing or decreasing the torque of the synchronous machine in a case where it is determined that the difference exceeds the threshold value.

FIG. 1

# FIG. 2

CONTROL DEVICE — 20

PROCESSOR — 21

ACQUISITION UNIT — 210

TORQUE ESTIMATION UNIT — 211

DISPLACEMENT ANGLE ESTIMATION UNIT — 212

DISPLACEMENT ANGLE MEASUREMENT UNIT — 213

DETERMINATION UNIT — 214

ADJUSTMENT UNIT — 215

MEMORY — 22

STORAGE — 23

INTERFACE — 24

# FIG. 3

START

S10 — ACQUIRE MEASUREMENT VALUE

S11 — CALCULATE TORQUE ESTIMATION VALUE

S12 — CALCULATE DISPLACEMENT ANGLE ESTIMATION VALUE

S13 — ACQUIRE DISPLACEMENT ANGLE MEASUREMENT VALUE

S14 — CALCULATE UPPER LIMIT VALUE AND LOWER LIMIT VALUE

S15 — MEASUREMENT VALUE > UPPER LIMIT VALUE?

NO

YES

S17 — MEASUREMENT VALUE < LOWER LIMIT VALUE?

NO

YES

S16 — DECREASE TORQUE

S18 — INCREASE TORQUE

END

FIG. 4

FIG. 5

FIG. 6

# FIG. 7

# FIG. 8

FIG. 9

SENSOR 16

SENSOR 17

AMMETER 18

SPEED MEASUREMENT UNIT

217

$\omega_{HSR}$

$\omega_{PPR}$

$G_r$

218

216 TORQUE COMMAND VALUE ACQUISITION UNIT

20

21

$-$ $+$

$K$

$+$ $+$

TORQUE COMMAND VALUE AFTER CORRECTION

POWER CONVERTER 30

ABSOLUTE VALUE $|I_{stator}|$

EP 4 622 094 A1

# FIG. 10

EP 4 622 094 A1

FIG. 11

FIG. 12

EP 4 622 094 A1

# FIG. 13

EP 4 622 094 A1

## INTERNATIONAL SEARCH REPORT

International application No.

**PCT/JP2023/038762**

| A. | CLASSIFICATION OF SUBJECT MATTER |
|---|---|

*H02P 25/024*(2016.01)i
FI:   H02P25/024

According to International Patent Classification (IPC) or to both national classification and IPC

| B. | FIELDS SEARCHED |
|---|---|

Minimum documentation searched (classification system followed by classification symbols)

H02P25/024

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-129756 A (MITSUBISHI HEAVY INDUSTRIES, LTD.) 06 September 2022 (2022-09-06)<br>entire text, all drawings | 1-7 |
| A | JP 2011-166963 A (HITACHI CABLE LTD) 25 August 2011 (2011-08-25)<br>entire text, all drawings | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/038762** |

| Patent document cited in search report | | | Publication date (day/month/year) | Patent family member(s) | | | Publication date (day/month/year) |
| --- | --- | --- | --- | --- | --- | --- | --- |
| JP | 2022-129756 | A | 06 September 2022 | WO 2022/181599 entire text, all drawings | A1 | | |
| JP | 2011-166963 | A | 25 August 2011 | CN 102148598 entire text, all drawings KR 10-2011-0093586 | A A | | |

**EP 4 622 094 A1**

**Patent documents cited in the description**

- JP 2022212341 A

- JP 2014125991 A